# EUROPÄISCHE PATENTSCHRIFT

(11) **EP 1 016 800 B1**
(45) Veröffentlichungstag und Bekanntmachung des Hinweises auf die Patenterteilung: **11.12.2002**
(21) Anmeldenummer: 99121897.5
(22) Anmeldetag: 05.11.1999
(51) Int. Cl.: F16C 33/78, F16J 15/32

(54) **Kassettendichtung für eine Wellenlagerung**
Cartridge seal for a shaft bearing
Cartouche d'étanchéité pour un palier d'arbre

(30) Priorität: 28.12.1998 DE 19860426; 20.10.1999 DE 19950411
(43) Veröffentlichungstag der Anmeldung: 05.07.2000
(73) Patentinhaber: Carl Freudenberg KG, 69469 Weinheim (DE)
(72) Erfinder: Drucktenhengst, Rolf, 68623 Lampertheim (DE)

(56) Entgegenhaltungen:
- WO-A-90/11463
- DE-A- 2 500 099
- DE-A- 19 624 611
- US-A- 4 239 243
- US-A- 4 667 968
- US-A- 5 004 248
- US-A- 5 015 001
- US-A- 5 201 533
- US-A- 5 209 499
- US-A- 5 642 889

## Beschreibung

Die Erfindung befaßt sich mit einer Kassettendichtung zur Abdichtung des Ringspalts zwischen einem Gehäuse und einer darin gelagerten Welle mit einem in die Gehäusebohrung eingefügten Außenring mit einem Dichtelement und einem auf der Welle festgelegten Innenring mit einer Lauffläche für das Dichtelement, sowie einem mit dem Innenring integral verbundenen Schleuderblech, das in Bezug auf das Gehäuse eine axial nach außen gerichtete Nut bildet, wobei das Dichtelement aus einem Befestigungskranz mit einem Nabenteil besteht, das abdichtend die Lauffläche des Innenrings umfaßt und der Befestigungskranz mit seiner axial nach innen gerichteten freien Fläche dem Schleuderblech gegenüberliegend angeordnet ist, so daß bei einer axialen Verschiebung des Dichtelements und des Innenrings zueinander die freie Fläche des Befestigungskranzes am Schleuderblech zur Anlage kommt, sowie der Innenring und das Schleuderblech auf ihren radial nach innen liegenden Seiten mit einer Schicht aus elastomerem Material versehen sind.

### Stand der Technik

Zur Abdichtung einer drehbaren Welle gegenüber dem feststehenden Gehäuse sind eine Vielzahl von Dichtungen bekannt. Verbreitet sind unter anderem auch sogenannte Kassettendichtungen, die im wesentlichen aus einem auf die Welle aufschiebbaren Laufring für die in der Gehäusebohrung angeordnete Lippendichtung bestehen. Die Laufringe haben den Vorteil, daß die Welle selbst keiner besonderen Oberflächenbearbeitung unterzogen werden braucht. Außerdem ist eine gezielte Anpassung der aufeinander gleitenden Werkstoffe möglich. Letztlich können Dichtungsring und Laufring im Reparaturfall leicht ausgewechselt werden.

Eine solche Kassettendichtung ist beispielsweise aus der DE 25 00 099 B bekannt. Die beiden Teile der Dichtung und zwar der Lippendichtungsring und der Laufring sind über Krallen miteinander verbunden und axial miteinander arretiert. Diese Dichtung hat jedoch den Nachteil, daß bei einer axialen Verschiebung der Teile zueinander, die z. B. beim Einbau der Antriebswelle stattfindet, eine Reibung an den ineinandergreifenden Teilen möglich ist, was zu einem Verschleiß und gegebenenfalls einer Zerstörung der Teile führen kann.

Durch die DE 196 24 611 A ist eine Kassettendichtung bekannt geworden, mit der im Betrieb gute Ergebnisse erreicht werden. Jedoch kann auch hier ein ungewollter Verschleiß auftreten. Bei einem mehrmaligen Ein- und Ausbau der Kassettendichtung für den mit dem Getriebe durchzuführenden Erprobungsfall, können auch Beschädigungen an der Dichtung auftreten, die ihre Wirksamkeit vermindern. So kann insbesondere beim Ein- und Ausbau von endseitig als Vielkeilwelle ausgebildeten Wellen eine Beschädigung an den vergleichsweise weichen Dichtkörpern auftreten.

Die aus der US 5,004,248 A bekannte Kassettendichtung, von der im Oberbegriff des Anspruchs 1 ausgegangen wird, behebt diesen Nachteil zwar, indem an den elastomeren Dichtkörper ein Anschlag angeformt ist. Die oben erwähnten Kassettendichtungen haben jedoch alle den Nachteil, daß ein häufiger Austausch der Antriebswelle nicht vorgesehen ist und Probleme bei der Abdichtung zwischen Welle und Innenring auftreten.

### Darstellung der Erfindung

Der Erfindung liegt die Aufgabe zugrunde, hier Abhilfe zu schaffen und ausgehend von einem Stand der Technik, wie er in der US 5,004,248 A behandelt ist, eine Kassettendichtung zu erstellen, die einfach in ihrem Aufbau ist und gegen Beschädigungen, insbesondere während der Montagevorgänge weitgehend geschützt ist. Die nach dem Einbau der Welle im axialen Kontakt der Teile mögliche Reibung und der nachfolgende Verschleiß sollen vermieden werden. Außerdem soll eine gute Abdichtung gegen Staubteile erreicht werden.

Die Lösung der gestellten Aufgabe wird bei der eingangs genannten Kassettendichtung dadurch erreicht, daß die elastomere Schicht des Innenrings mit einer ringförmigen Dichtlippe versehen ist, deren Innendurchmesser kleiner als der Innendurchmesser ringförmiger Vorsprünge der elastomeren Schicht ist.

Eine solche Dichtung besteht aus nur wenigen Teilen, ist einfach zu fertigen und zu montieren. Das Dichtelement selbst wird bevorzugt aus Polytetrafluorethylen hergestellt. Es wird mit einem Außenring verbunden, der mit Pressitz in die Gehäusebohrung eingesetzt ist. Die Verbindung kann je nach Art der verwendeten Materialien in an sich bekannter Weise vorgenommen werden.

Der Innenring besteht aus einem Metallring, an dem integral das Schleuderblech anschließt. Beide sind auf ihren radial innen liegenden Seiten mit einer Schicht aus elastomerem Material überzogen. Im Bereich des Innenrings ist die elastomere Schicht mit ringförmigen Vorsprüngen versehen um dadurch die Montage der Welle zu erleichtern und einen ausreichenden Festsitz zu der einzusetzenden Welle zu erreichen.

Die elastomere Schicht des Innenrings ist an ihrem äußeren Abschluß mit einer ringförmigen Dichtlippe versehen, deren Innendurchmesser kleiner als der Innendurchmesser der ringförmigen Vorsprünge der elastomeren Schicht ist.

Eine besonders gute Abdichtung gegen von außen ankommende Staubpartikel wird dann erreicht, wenn zusätzlich am Befestigungskranz des Dichtelements ein radial nach außen über den Befestigungskranz vorstehender Dichtring ausgebildet ist, der mit seiner Dichtfläche an der seitlichen gegenüberliegenden Nutfläche des Schleuderblechs anliegt. Eventuelle Schmutzpartikel werden hier abgewiesen. Der Dichtring liegt mit Spannung an der Nutfläche an. Dieses kann beispielsweise dadurch erreicht werden, daß der Dichtring im Außendurchmesser geringfügig größer dimensioniert ist als der Innendurchmesser der zugehörigen Nutfläche. Beim Aufsetzen des Dichtelements auf den Innenring wird das Dichtelement gleichzeitig in die vom Schleuderblech in Verbindung mit dem Innenring gebildete Nut gedrückt und dichtet ab. Dabei kann der Dichtring leicht umgebogen werden. Um dieses zu erleichtern, kann der Dichtring an seinem Übergang zum Befestigungskranz mit einer Einkerbung versehen werden.

Bei einem am Innenring angebrachten und als Spritzring dienenden Schleuderblech mit einem radial nach außen abgewinkelten flanschartigen Teil kommt der Befestigungskranz bei einer axialen Verschiebung an dem flanschartigen Teil zur Anlage. Andere Ausführungsformen sind jedoch auch möglich. So kann der Außenring mit einem sich in die vom Schleuderblech gebildete Nut erstreckenden Schutzring versehen sein, der den Befestigungskranz des Dichtelements trägt, so daß der Befestigungskranz bei einer axialen Verschiebung am Nutgrund zur Anlage kommt.

Der Außenring kann mit axial vorstehenden Stegen versehen sein, die mit Nasen ausgestattet als Schnappverbindung den flanschartigen Teil des Spritzrings hintergreifen. Auf diese Weise sind die beiden Teile der Kassettendichtung unverlierbar miteinander verbunden. Hier sind auch andere Verbindungen möglich. So kann der Außenring mit einem Sicherungsring versehen sein, der lösbar oder fest mit dem Außenring verbunden wird.

Der Außenring kann aus einem elastischen Kunststoff hergestellt werden, vorzugsweise einem Thermoplast.

Das axial äußere Ende des Innenrings kann eine Abstufung haben, die von der elastomeren Schicht eingefaßt ist. Dabei wird die radial äußere Fläche der Schicht so ausgerichtet, daß sie plan zur Lauffläche des Innenrings verläuft.

Die Dichtlippe dient zur Abdichtung einer Prüfwelle während der Erprobung des Getriebes. Für die Erprobung des Getriebes wird überlicherweise das Getriebe mit der Welle im Gehäuse zusammengebaut und die Erprobung durchgeführt. Während dieser Montage kann durch den Ein- und Ausbau der Abtriebswelle eine Beschädigung an der Beschichtung des Innenrings und auch eine unnötige Beanspruchung der Kassettendichtung auftreten. Um dieses zu vermeiden wird in weiterer Ausgestaltung der vorliegenden Erfindung eine Vorrichtung zur Erprobung von Schaltgetrieben vorgeschlagen, welche sich dadurch auszeichnet, daß für die Erprobung des Getriebes eine Prüfwelle als Abtriebswelle benutzt wird, deren Wellendurchmesser geringfügig kleiner als der Durchmesser der Endantriebswelle ist, so daß die Prüfwelle allein von der Ringförmigen Dichtlippe des Innenrings umfaßt wird. Für die Erprobung wird somit eine Prüfwelle benutzt, die von der Dichtlippe abgedichtet wird. Als Endantriebswelle wird hier die Abtriebswelle bezeichnet, die für den üblichen normalen Antrieb benutzt wird.

### Kurzbeschreibung der Zeichnungen

Die Erfindung wird anhand der Zeichnungen nachfolgend näher erläutert.

Es zeigen:
- Figur 1: den oberen Teil einer Kassettendichtung im Längsschnitt,
- Figur 2: eine Kassettendichtung mit einer anders ausgeführten Verbindung von Außen- und Innenring
- Figur 3: eine Kassettendichtung mit einem Schutzring und
- Figur 4: eine Kassettendichtung mit einem zusätzlichen Dichtring.

### Ausführung der Erfindung

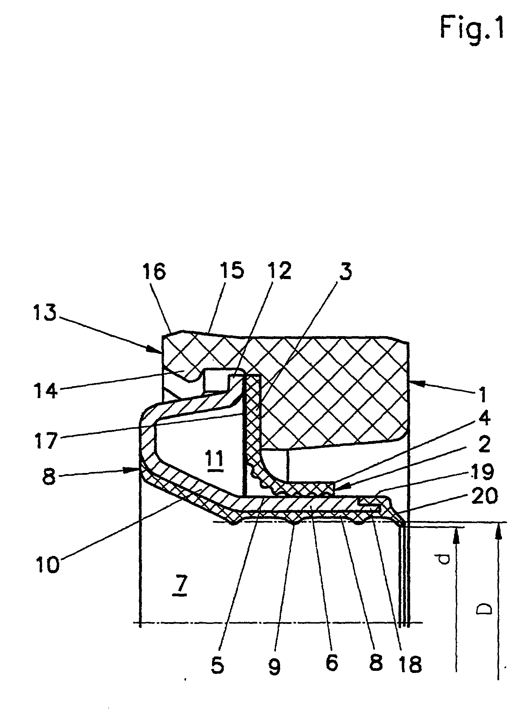

Die Figur 1 zeigt ein Ausführungsbeispiel der erfindungsgemäßen Kassettendichtung im Längsschnitt mit ihren wesentlichen Teilen. In die Bohrung eines nicht näher gezeichneten Gehäuses ist der Außenring 1 mit dem Dichtelement 2 mit Preßsitz eingefügt. Das Dichtelement 2 ist aus Polytetrafluorethylen hergestellt und besteht aus einem Befestigungskranz 3 mit einem Nabenteil 4, welches abdichtend die Lauffläche 5 des Innenrings 6 umfaßt und auf seiner Dichtfläche mit einer Drallunterbrechung versehen ist. Die Drallunterbrechung dient zur Rückführung des Schmiermittels. Der Innenring 6 ist fest mit der Welle 7 verbunden. Hierfür ist der Innenring 6 mit einer elastomeren Schicht 8 mit ringförmigen Vorsprüngen 9 ausgestattet.

Mit dem Innenring 6 ist das als Spritzring dienende Schleuderblech 10 integral verbunden. Das Schleuderblech 10 ist mehrfach abgewinkelt, so daß es eine axial nach außen gerichtete Nut 11 bildet. Außerdem ist es mit einem nach außen abgewinkelten flanschartigen Teil 12 versehen. Der für Montagezwecke konisch ausgebildete, direkt an die Lauffläche 5 des Innenrings 6 anschließende Teil des Schleuderblechs 10 ist ebenfalls mit der elastomeren Schicht 8 überzogen, wodurch eine Schutzfunktion sowohl gegenüber dem Schleuderblech 10 als auch gegenüber der einzusetzenden Welle 7 erreicht wird.

Der Außenring 1 ist mit drei auf seinem Umfang verteilten axial vorstehenden Stegen 13 versehen, die mit den Nasen 14 ausgestattet sind. Die Nasen 14 hintergreifen den flanschartigen Teil 12 des Spritzrings. Die Nasen 14 mit dem Flanschteil 12 bilden auf diese Weise eine Schnappverbindung, so daß Außenring 1 und Innenring 6 unverlierbar miteinander verbunden sind. Die Stege 13 sind, wie in der Figur gezeigt, mit ihrer Außenwand radial leicht ansteigend ausgebildet und im vorderen Teil wieder leicht abfallend, so daß zwei konisch Bereiche 15 und 16 entstehen. Der konische Bereich 16 erleichtert die Einführung der Kassettendichtung in die Gehäusebohrung, während durch den Bereich 15 die Preßsitzhalterung in der Bohrung des Gehäuses unterstützt wird.

Das Dichtelement 2 ist axial am Außenring 1 befestigt. Mit seiner axial nach innen gerichteten freien Fläche 17 ist es gegenüber dem flanschartigen Teil 12 des Spritzrings angeordnet. Hierdurch wird der Außenring 1 geschützt. Bei einer axialen Verschiebung von Außenring 1 zu Innenring 6 liegt der Befestigungskranz 3 des Dichtelements 2, das aus verschleißfestem Material besteht, am Teil 12 an und verhindert dadurch die unmittelbaren Berührung und eventuelle Zerstörung des Außenrings 1 durch das Schleuderblech 10.

Der Außenring 1 wird aus einem elastischen Kunststoff, vorzugsweise einem Thermoplast hergestellt. Für Anwendungsbereiche in denen eine höhere Steifheit erforderlich ist, kann der Außenring 1 selbstverständlich auch mit in das Material eingebetteten metallischen Verstärkungsringen versehen sein.

Das axial äußere Ende 18 des Innenrings 6 hat eine Abstufung, die von der elastomeren Schicht 8 eingefaßt ist. Die radial äußere Fläche 19 der Schicht 8 ist plan zur Lauffläche 5 des Innenrings 6, so daß bei der Montage des Außenrings 1 mit Innenring 6 hier keine Hindernisse vorhanden sind.

Die elastomere Schicht 8 des Innenrings 6 ist mit einer ringförmigen Dichtlippe 20 versehen, deren Innendurchmesser d kleiner ist als der Innendurchmesser D der ringförmigen Vorsprünge 9 der elastomeren Schicht 8. Diese Dichtlippe 20 ermöglicht ein neues Prüfverfahren für die Erprobung eines Schaltgetriebes bei dem eine weitgehende Schonung der Vorsprünge 9 bei der Montage und auch bei der Erprobung der Getriebe erreicht wird. Für die Erprobung des Getriebes kann eine Prüfwelle als Abtriebswelle benutzt werden, deren Wellendurchmesser geringfügig kleiner als der Durchmesser der Endantriebswelle ist, so daß die Prüfwelle allein von der ringförmigen Dichtlippe 20 des Innenrings 6 abgedichtet wird.

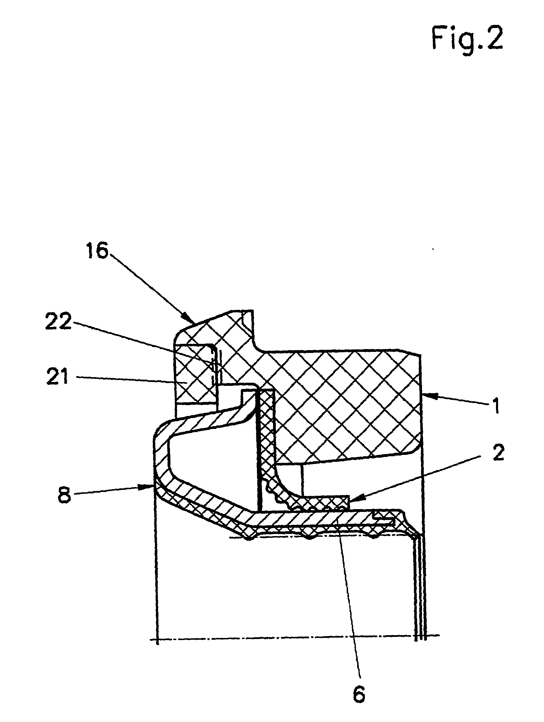

Die Figur 2 zeigt ein Ausführungsbeispiel, das in der Mehrzahl der Teile mit der Figur 1 übereinstimmt. Anders ist die Verbindung von Außenring 1 und Innenring 6. Hier wird keine Schnappverbindung benutzt, sondern es ist ein Sicherungsring 21 vorgesehen, der formschlüssig über radiale Nuten 22 mit dem Außenring 1 verbunden ist. Der Sicherungsring 21 kann außerdem noch mit dem Außenring 1 verklebt sein.

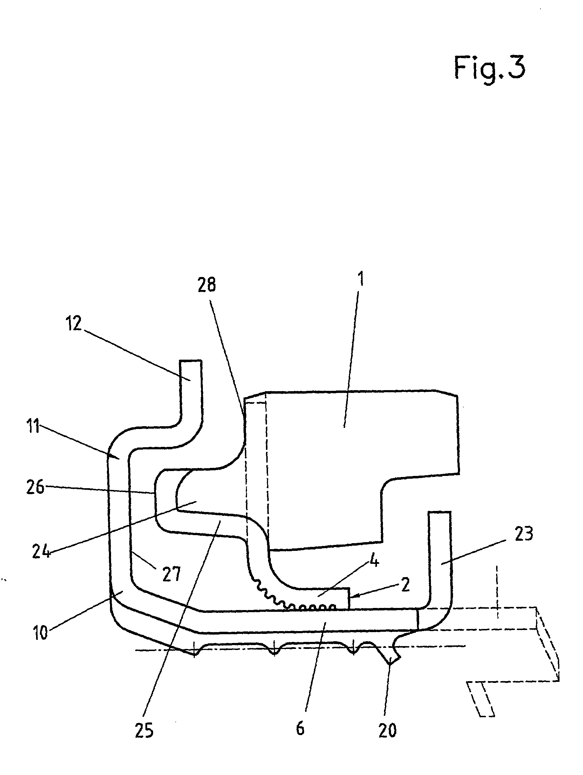

Die Figur 3 zeigt eine Ausführungsform, bei der der Außenring 1 am Innenring 6 über abgewinkelte Lappen 23 gehalten wird. In der Figur ist ein Lappen 23 gestrichelt in seiner Lage vor dem Abwinkeln eingezeichnet. Die Dichtlippe 20 für eine Prüfwelle mit kleinerem Durchmesser ist in diesem Ausführungsbeispiel etwas nach innen verlegt.

In die Nut 11 des Schleuderblechs 10 greift ein Schutzring 24 ein, der am Außenring 1 ausgebildet ist. Der Befestigungskranz 25 folgt der Kontur des Schutzrings 24 und hat eine axial nach innen gerichtete freie Fläche 26, mit der er bei einer axialen Verschiebung von Dichtelement 2 und Innenring 6 zueinander am Nutgrund 27 des Schleuderblechs 10 zur Anlage kommt. Eine unmittelbare Berührung zwischen der Metallfläche des Schleuderblechs 10 und der Fläche des Außenrings 1 aus, beispielsweise Gummi wird vermieden. Es versteht sich, daß bei der gezeigten Ausführungsform der Abstand zwischen der freien Fläche 26 des Befestigungskranzes 25 und dem Nutgrund 27 geringer ist, als der Abstand zwischen der Dichtelementschulter 28 und dem Flanschteil 12 des Schleuderblechs 10. Die Form des Befestigungskranzes 25 wird bei der Einbringung des Außenrings 1 gebildet. Davor hat der Befestigungskranz 25 die gestrichelt eingezeichnete Form.

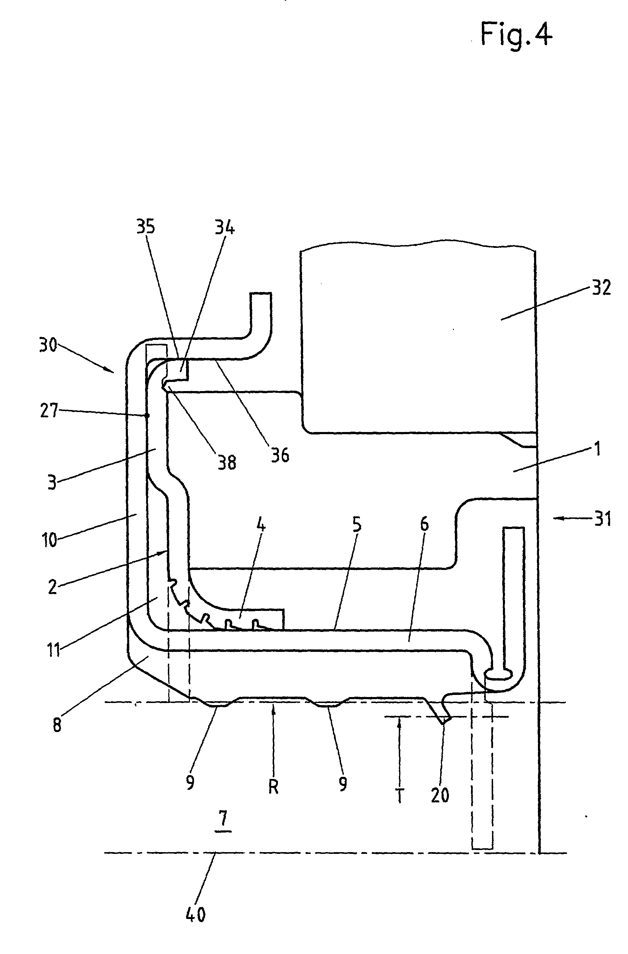

Die Figur 4 stellt eine Kassettendichtung 30 dar, die in den Ringspalt 31 zwischen dem Gehäuse 32 und der Welle 7 eingefügt ist. Die Kassettendichtung 30 besteht aus dem Dichtelement 2, das am Außenring 1 befestigt ist und mit seinem Nabenteil 4 an der Lauffläche 5 des Innenrings 6 anliegt. Am Innenring 6 ist die elastomere Schicht 8 mit den Vorsprüngen 9 und der Dichtlippe 20. Von der Dichtlippe 20 wird die Prüfwelle 7 mit dem verringerten Radius T und von den Vorsprüngen 9 die Endantriebswelle 7 mit dem Radius R erfaßt. Die Wellen 7 sind nur gestrichelt angedeutet; ihre Achse 40 strichpunktiert.

Das in der Figur 4 gezeigte Dichtelement 2 ist zusätzlich am Befestigungskranz 3 mit einem radial nach außen vorstehenden Dichtring 34 versehen, dessen Dichtfläche 35 an der Nutfläche 36 des Schleuderblechs 10 anliegt. Das Schleuderblech 10 ist so geformt, daß es mit seinen Wänden seine Nut 11 bildet, in die der Außenring 1 eingreift. Im Beispiel liegt der Befestigungskranz 3 des Dichtelements 2 am Nutgrund 27 an. Eine weitere Verschiebung von Schleuderblech 10 und Außenring 1 zueinander ist nicht mehr möglich. Nabenteil 4 und Dichtring 34 sind aus den gestrichelt eingezeichneten Lagen umgebogen in ihre Betriebslagen und dichten ab. Die für die Abdichtung benötigte Spannung am Nabenteil 4 und Dichtring 34 wird durch entsprechende Ausgestaltung der Teile unterstützt. Hierfür ist der Dichtring 34 an seinem Übergang zum Befestigungskranz 3 mit der Einkerbung 38 versehen. Die Nuttiefe ist so gewählt, daß mögliche Verschiebungen von Außen- und Innenring zueinander die Dichtfunktion des Dichtrings 34 nicht aufheben. Die seitlichen Nutwände 5 und 36 verlaufen koaxial zueinander.

## Patentansprüche

1. Kassettendichtung zur Abdichtung des Ringspalts zwischen einem Gehäuse und einer darin gelagerten Welle (7) mit einem in die Gehäusebohrung eingefügten Außenring mit einem Dichtelement (2) und einem auf der Welle festgelegten Innenring (6) mit einer Lauffläche für das Dichtelement (2), sowie einem mit dem Innenring (6) integral verbundenen Schleuderblech (10), das in Bezug auf das Gehäuse eine axial nach außen gerichtete Nut (11) bildet, wobei das Dichtelement (2) aus einem Befestigungskranz (3, 25) mit einem Nabenteil (4) besteht, das abdichtend die Lauffläche (5) des Innenrings (6) umfaßt und der Befestigungskranz (3, 25) mit seiner axial nach innen gerichteten freien Fläche (17, 26) dem Schleuderblech (10) gegenüberliegend angeordnet ist, so daß bei einer axialen Verschiebung des Dichtelements (2) und des Innenrings (6) zueinander die freie Fläche (17, 26) des Befestigungskranzes (3, 25) am Schleuderblech (10) zur Anlage kommt, sowie der Innenring (6) und das Schleuderblech (10) auf ihren radial nach innen liegenden Seiten mit einer Schicht (8) aus elastomerem Material versehen sind, **dadurch gekennzeichnet, daß** die elastomere Schicht (8) des Innenrings (6) mit einer ringförmigen Dichtlippe (20) versehen ist, deren Innendurchmesser (d) kleiner als der Innendurchmesser (D) ringförmiger Vorsprünge (9) der elastomeren Schicht (8) ist.

2. Kassettendichtung nach Anspruch 1, **dadurch gekennzeichnet, daß** das axial äußere Ende (18) des Innenrings (6) eine Abstufung hat und von der elastomeren Schicht (8) eingefaßt ist, wobei die radial äußere Fläche (19) der Schicht (8) plan zur Lauffläche (5) des Innenrings (6) verläuft.

3. Kassettendichtung nach einem der Ansprüche 1 2, **dadurch gekennzeichnet, daß** der Außenring (1) aus einem elastischen Kunststoff, vorzugsweise einem Thermoplast besteht.

4. Kassettendichtung nach Anspruch 3, **dadurch gekennzeichnet, daß** der Außenring (1) einen Schutzring (24) hat, der sich in die Nut (11) des Schleuderblechs (10) erstreckt und den Befestigungskranz (25) des Dichtelements (2) trägt, so dass die freie Fläche (26) des Befestigungskranzes (25) bei axialer Verschiebung am Nutgrund (27) zur Anlage kommt.

5. Kassettendichtung nach einem der Ansprüche 1 bis 4, **dadurch gekennzeichnet, daß** das Dichtelement (2) aus Polytetrafluorethylen (PTFE) oder einem vergleichbaren Material besteht.

6. Kassettendichtung nach einem der Ansprüche 1 bis 5, **dadurch gekennzeichnet, daß** das axial äußere Ende des Innenrings (6) mit vorstehenden Lappen (23) versehen ist, die abgewinkelt den Außenring (1) am Innenring (6) halten.

7. Kassettendichtung nach einem der Ansprüche 1 bis 6, **dadurch gekennzeichnet, daß** am Befestigungskranz (3, 25) des Dichtelements (2) ein radial nach außen über den Befestigungskranz (3, 25) vorstehender Dichtring (34) ausgebildet ist, der mit seiner Dichtfläche (35) an der seitlichen gegenüberliegenden Nutfläche (36) des Schleuderblechs (10) anliegt.

8. Kassettendichtung nach Anspruch 7, **dadurch gekennzeichnet, daß** der Dichtring (34) mit Spannung an der Nutfläche (36) anliegt.

9. Kassettendichtung nach Anspruch 8, **dadurch gekennzeichnet, daß** der Dichtring (34) an seinem Übergang zum Befestigungskranz (3, 25) mit einer Einkerbung (38) versehen ist.

10. Vorrichtung zur Erprobung von Motorgetrieben mit einer Kassettendichtung nach einem der Ansprüche 1 bis 9, **dadurch gekennzeichnet, daß** für die Erprobung eines Schaltgetriebes eine Prüfwelle (39) als Abtriebswelle dient, deren Wellendurchmesser geringfügig kleiner als der Durchmesser der Endantriebswelle (7) ist, so daß die Prüfwelle (39) allein von der ringförmigen Dichtlippe (20) des Innenrings (6) umfaßt wird.

## Claims

1. A unitized seal for sealing the annular gap between a housing and a shaft (7) mounted therein, with an outer ring which is inserted in the housing bore and has a sealing element (2), and with an inner ring (6) which is fixed on the shaft and has a running face for the sealing element (2), and also with a baffle plate (10) which is integrally connected to the inner ring (6) and forms an axially outward-directed groove (11) with respect to the housing, the sealing element (2) comprising a fastening rim (3, 25) with a hub part (4), which encloses the running face (5) of the inner ring (5) in a sealing manner, and the fastening rim (3, 25) being arranged with its axially inward-directed free face (17, 26) lying opposite the baffle plate (10), so that, when there is an axial displacement of the sealing element (2) and the inner ring (6) in relation to each other, the free face (17, 26) of the fastening rim (3, 25) comes to bear against the baffle plate (10), and the inner ring (6) and the baffle plate (10) being provided on their radially inward sides with a layer (8) of elastomeric material, **characterized in that** the elastomeric layer (8) of the inner ring (6) is provided with an annular sealing lip (20), the inside diameter (d) of which is smaller than the inside diameter (D) of the annular projections (9) of the elastomeric layer (8).

2. A unitized seal according to claim 1, **characterized in that** the axially outer end (18) of the inner ring (6) has a step formation and is encapsulated by the elastomeric layer (8), the radially outer face (19) of the layer (8) running planar to the running face (5) of the inner ring (6).

3. A unitized seal according to either of claims 1 and 2, **characterized in that** the outer ring (1) comprises a flexible plastic, preferably a thermoplastic.

4. A unitized seal according to claim 3, **characterized in that** the outer ring (1) has a guard ring (24), which extends into the groove (11) of the baffle plate (10) and bears the fastening rim (25) of the sealing element (2), so that the free face (26) of the fastening rim (25) comes to bear against the bottom of the groove (27) when there is axial displacement.

5. A unitized seal according to any one of claims 1 to 4, **characterized in that** the sealing element (2) comprises polytetrafluoroethylene (PTFE) or a comparable material.

6. A unitized seal according to any one of claims 1 to 5, **characterized in that** the axially outer end of the inner ring (6) is provided with projecting lugs (23), which, in an angled-away form, hold the outer ring (1) against the inner ring (6).

7. A unitized seal according to any one of claims 1 to 6, **characterized in that** on the fastening rim (3, 25) of the sealing element (2) there is formed a sealing ring (34) which projects radially outward over the fastening rim (3, 25) and bears with its sealing face (35) against the lateral, oppositely lying groove face (36) of the baffle plate (10).

8. A unitized seal according to claim 7, **characterized in that** the sealing ring (34) bears with stress against the groove face (36).

9. A unitized seal according to claim 8, **characterized in that** the sealing ring (34) is provided at its transition to the fastening rim (3, 25) with a notch (38).

10. A device for testing engine gearboxes with a unitized seal according to any one of claims 1 to 9, **characterized in that**, for testing a manual gearbox, a test shaft (39) serves as the output shaft, the shaft diameter of which is slightly smaller than the diameter of the final drive shaft (7), so that the test shaft (39) is enclosed by the annular sealing lip (20) of the inner ring (6) alone.

## Revendications

1. Cartouche d'étanchéité pour l'étanchéité de l'espace annulaire entre un carter et un arbre (7) logé dans le carter, avec une bague extérieure insérée dans l'alésage du carter possédant un élément d'étanchéité (2) et avec une bague intérieure (6) fixée sur l'arbre possédant une surface de roulement pour l'élément d'étanchéité (2) ainsi qu'avec une tôle centrifuge (10) raccordée intégralement à la bague intérieure (6), qui forme une rainure (11) dirigée axialement vers l'extérieur par rapport au carter, l'élément d'étanchéité (2) étant constitué d'une couronne de fixation (3, 25) ayant une pièce de moyeu (4) qui entoure la surface de roulement (5) de la bague intérieure (6) de manière étanche, et la couronne de fixation (3, 25) étant disposée à l'opposé de la tôle centrifuge (10) avec sa surface libre (17, 26) dirigée axialement vers l'intérieur, de sorte qu'en cas de déplacement axial de l'élément d'étanchéité (2) et de la bague intérieure (6) l'un vers l'autre, la surface libre (17, 26) de la couronne de fixation (3, 25) vient s'appliquer sur la tôle centrifuge (10) et que la bague intérieure (6) et la tôle centrifuge (10) sont munies d'une couche (8) en matériau élastomère sur leurs côtés situés radialement vers l'intérieur, **caractérisée en ce que** la couche élastomère (8) de la bague intérieure (6) est munie d'une lèvre d'étanchéité (20) en forme d'anneau, dont le diamètre intérieur (d) est inférieur au diamètre intérieur (D) de saillies (9) en forme d'anneau de la couche élastomère (8).

2. Cartouche d'étanchéité selon la revendication 1, **caractérisée en ce que** l'extrémité (18) axiale extérieure de la bague intérieure (6) possède un gradin et qu'elle est entourée par la couche élastomère (8), la surface radiale extérieure (19) de la couche (8) s'étendant de manière plane par rapport à la surface de roulement (5) de la bague intérieure (6).

3. Cartouche d'étanchéité selon l'une des revendications 1 ou 2, **caractérisée en ce que** la bague extérieure (1) est constituée d'une matière plastique élastique, de préférence de thermoplastique.

4. Cartouche d'étanchéité selon la revendication 3, **caractérisée en ce que** la bague extérieure (1) possède un anneau de protection (24) qui s'étend dans la rainure (11) de la tôle centrifuge (10) et porte la couronne de fixation (25) de l'élément d'étanchéité (2) de telle manière que la surface libre (26) de la couronne de fixation (25) vient s'appliquer sur le fond de la rainure (27) en cas de déplacement axial.

5. Cartouche d'étanchéité selon l'une des revendications 1 à 4, **caractérisée en ce que** l'élément d'étanchéité (2) est constitué de polytétrafluoréthylène (PTFE) ou d'un matériau comparable.

6. Cartouche d'étanchéité selon l'une des revendications 1 à 5, **caractérisée en ce que** l'extrémité axiale extérieure de la bague intérieure (6) est munie de languettes (23) en saillie qui maintiennent la bague extérieure (1) sur la bague intérieure (6) de manière angulaire.

7. Cartouche d'étanchéité selon l'une des revendications 1 à 6, **caractérisée en ce qu'**une bague d'étanchéité (34) en saillie de manière radiale vers l'extérieur au-dessus de la couronne de fixation (3, 25) est formée sur la couronne de fixation (3, 25) de l'élément d'étanchéité (2), la surface d'étanchéité (35) de cette bague d'étanchéité étant appliquée sur la surface de la rainure (36) de la tôle centrifuge (10) latéralement opposée.

8. Cartouche d'étanchéité selon la revendication 7, **caractérisée en ce que** la bague d'étanchéité (34) est appliquée avec tension sur la surface de la rainure (36).

9. Cartouche d'étanchéité selon la revendication 8, **caractérisée en ce que** la bague d'étanchéité (34) est munie d'une entaille (38) à son passage vers la couronne de fixation (3, 25).

10. Dispositif pour l'essai de boîtes de vitesses de moteurs avec une cartouche d'étanchéité selon l'une des revendications 1 à 9, **caractérisé en ce qu'**un arbre de contrôle (39) sert d'arbre d'entraînement pour l'essai d'une boîte de vitesses, dont le diamètre de l'arbre est inférieur de manière minimale au diamètre de l'arbre d'entraînement terminal (7), de telle sorte que seul l'arbre de contrôle (39) est entouré par la lèvre d'étanchéité (20) en forme d'anneau de la bague intérieure (6).
